# EUROPÄISCHE PATENTSCHRIFT

(11) **EP 3 144 111 B1**
(45) Veröffentlichungstag und Bekanntmachung des Hinweises auf die Patenterteilung: **04.07.2018**
(21) Anmeldenummer: 16001977.4
(22) Anmeldetag: 10.09.2016
(51) Int. Cl.: B25F 5/00

(54) **VERFAHREN ZUR INBETRIEBNAHME EINES HANDGEFÜHRTEN ARBEITSGERÄTES MIT EINEM ELEKTROMOTOR**
METHOD FOR STARTING UP A HAND-HELD WORK MACHINE WITH AN ELECTRIC MOTOR
PROCEDE DE MISE EN SERVICE D'UN APPAREIL DE TRAVAIL PORTATIF COMPRENANT UN MOTEUR ELECTRIQUE

(30) Priorität: 15.09.2015 DE 102015012043
(43) Veröffentlichungstag der Anmeldung: 22.03.2017
(73) Patentinhaber: Andreas Stihl AG & Co. KG, 71336 Waiblingen (DE)
(72) Erfinder: Gerstenberger, Oliver, D-71254 Ditzingen (DE); Hoche, Florian, D-74354 Besigheim (DE); Gurr, Kay-Steffen, D-74078 Heilbronn (DE); Gwosdz, Fabian, D-73614 Schorndorf (DE)
(74) Vertreter: Wasmuth, Rolf

(56) Entgegenhaltungen:
- EP-A1- 2 572 832
- EP-A1- 2 623 267
- EP-A1- 2 639 016
- EP-A1- 2 910 339
- DE-A1- 10 360 165

## Beschreibung

Die Erfindung betrifft ein Verfahren zur Inbetriebnahme eines handgeführten Arbeitsgerätes mit einem Elektromotor nach dem Oberbegriff des Anspruchs 1 sowie ein handgeführtes Arbeitsgerät mit einem Elektromotor nach dem Oberbegriff des Anspruchs 15.

Ein Arbeitsgerät mit einem Elektromotor ist aus der DE 103 60 165 A1 bekannt. Hierin wird vorgeschlagen, zur Erhöhung der Betriebssicherheit eines Elektrowerkzeuges innerhalb eines bestimmten Zeitfensters ein oder mehrere Schaltelemente in bestimmter Weise zu betätigen. Insbesondere werden am Gehäuse des Elektrowerkzeuges mehrere elastische Tastflächen vorgesehen, die z. B. gleichzeitig oder in bestimmter Weise hintereinander zu betätigen sind, um das Elektrowerkzeug in Betrieb zu nehmen.

In der Praxis hat sich gezeigt, dass mehrere vorgesehene Schaltelemente zur Inbetriebnahme eines Elektrowerkzeugs den Arbeitsfluss mitunter erheblich stören; darüber hinaus ist bei der Anordnung mehrerer Schaltelemente eine erhöhte Störanfälligkeit gegeben.

Der Erfindung liegt die Aufgabe zugrunde, die Betriebssicherheit zur Inbetriebnahme eines handgeführten elektrischen Arbeitsgerätes zu erhöhen, ohne die Bedienungsfreundlichkeit für den Benutzer einzuschränken.

Die Aufgabe wird erfindungsgemäß gelöst durch ein Verfahren zur Inbetriebnahme eines handgeführten Arbeitsgerätes mit einem Elektromotor, wobei eine Spannungsquelle zum Betrieb des Elektromotors und ein an einem Handgriff des Arbeitsgerätes, vom Benutzer zu bedienendes manuelles Betätigungsglied zur Inbetriebnahme des Elektromotors vorgesehen ist. Das Betätigungsglied ist mit einer Steuereinheit verbunden, die die Energiezufuhr von der Spannungsquelle zu dem Elektromotor in Abhängigkeit von einem Betriebssignal des Betätigungsgliedes steuert. In einem Sperrzustand sperrt die Steuereinheit die Zufuhr von elektrischer Energie zum Elektromotor unabhängig von einem Betriebssignal des Betätigungsgliedes, wobei die Steuereinheit nach Empfang eines Steuersignals die Steuereinheit aus dem Sperrzustand in den Bereitschaftszustand schaltet, um eine Energiezufuhr zu dem Elektromotor freizugeben. Das Steuersignal wird aus einer Kombination eines Betätigungshubes des Betätigungsgliedes und einer Betätigungszeit des Betätigungsgliedes abgeleitet, wobei ein Steuersignal dann generiert wird, wenn innerhalb einer vorgegebenen Betätigungszeit das Betätigungsglied in einer Betätigungsrichtung über eine Hubschwelle hinaus einen vorgegebenen Betätigungshub durchfahren hat und entgegen der Betätigungsrichtung einen vorgegebenen Rückstellhub durchfahren hat.

Nach dem erfindungsgemäßen Verfahren wird das ohnehin für die Inbetriebnahme des Arbeitsgerätes notwendige Betätigungsglied genutzt, um zur Erhöhung der Bediensicherheit den Sperrzustand der Steuereinheit erst dann aufzuheben, wenn aufgrund der vorgegebenen Betätigung des Betätigungsgliedes ein Steuersignal generiert wird. Die Betriebssicherheit wird dadurch erreicht, dass das Betätigungsglied nicht nur einen bestimmten Betätigungshub in Betätigungsrichtung und einen Rückstellhub entgegen der Betätigungsrichtung durchfahren muss, sondern dass diese Bewegung auch innerhalb einer vorgegebenen Betätigungszeit ausgeführt werden muss. Die Kombination aus einem minimalen Betätigungshub über eine Hubschwelle hinaus, dem vorgegebenen Rückstellhub und der vorgegebenen Zeit gewährleistet eine hohe Betriebssicherheit gegen unbeabsichtigtes Einschalten des Elektromotors.

Vorteilhaft wird während des vorgegebenen Rückstellhubs die Hubschwelle entgegen der Betätigungsrichtung überfahren. Die Hubschwelle kann in einfacher Weise durch einen Schalter gewährleistet werden, so dass beim Betätigungshub ein erstes Schalten des Schalters und beim Rückstellhub ein zweites Schalten des Schalters ausgeführt wird. Die Zeit zwischen dem ersten Schalten und dem zweiten Schalten darf dann nicht größer als die vorgegebene Betätigungszeit sein.

Zur weiteren Erhöhung der Betriebssicherheit ist vorgesehen, dass das Steuersignal zum Schalten der Steuereinheit in den Bereitschaftszustand erst dann generiert wird, wenn nach dem vorgegebenen Rückstellhub die Hubschwelle ein zweites Mal in Betätigungsrichtung überfahren wird. Dies bedeutet, dass der Benutzer das Betätigungsglied sehr gezielt bedienen muss, um dann erst beim zweiten Überfahren der Hubschwelle in Betätigungsrichtung den Bereitschaftszustand der Steuereinheit auszulösen.

Das Steuersignal wird erst dann generiert, wenn das zweite Überfahren der Hubschwelle innerhalb einer vorgegebenen Pausenzeit nach dem Überfahren der Hubschwelle entgegen der Betätigungsrichtung erfolgt.

Die Betätigungszeit zur Ausführung des Betätigungshubes und des Rückstellhubes beträgt vorteilhaft 50 Millisekunden bis 1 Sekunde; der Betätigungshub kann 40% bis 90% des konstruktiven Betätigungshubes des Betätigungsgliedes sein.

Zur Erhöhung der Betriebssicherheit ist ferner vorgesehen, dass die Steuereinheit in den Sperrzustand zurückschaltet, wenn innerhalb einer vorgegebenen Zeitspanne nach dem Auftreten des Steuersignals kein - weiteres - Betriebssignal des Betätigungsgliedes eingeht. Diese vorgegebene Zeitspanne kann zwischen 1 Sekunde und 5 Sekunden liegen.

Das Steuersignal wird nur dann generiert, wenn ein am Handgriff angeordneter Griffsensor ein Anwesenheitssignal für die Hand eines Benutzers abgibt. Erlischt das Anwesenheitssignal des Griffsensors, wird die Steuereinheit in den Sperrzustand zurückgeschaltet.

Es kann vorteilhaft sein, nach einem Erlöschen des Anwesenheitssignals des Griffsensors die Steuereinheit erst nach Ablauf einer vorgegebenen Zeitspanne von z. B. 1 Sekunde in den Sperrzustand zurückzuschalten. Dadurch wird dem Benutzer die Möglichkeit gegeben, ein Umgreifen mit seiner das Arbeitsgerät führenden Hand auszuführen, ohne dass die Steuereinheit eingreift.

In bevorzugter Ausgestaltung sind der Betätigungshub des Betätigungsgliedes sowie der vorgegebene Rückstellhub des Betätigungsgliedes gleich ausgebildet.

Um den Bereitschaftszustand der Steuereinheit kenntlich zu machen, kann eine optische Anzeige vorgesehen sein, die insbesondere als LED ausgebildet ist.

Die Aufgabe wird gelöst durch ein handgeführtes Arbeitsgerät mit einem Elektromotor, wobei eine Spannungsquelle zum Betrieb des Elektromotors und ein an einem Handgriff des Arbeitsgerätes vom Benutzer zu bedienendes manuelles Betätigungsglied zur Inbetriebnahme des Arbeitsgerätes vorgesehen sind. Das Betätigungsglied ist mit einer Steuereinheit verbunden, wobei die Steuereinheit die Energiezufuhr von der Spannungsquelle zu dem Elektromotor in Abhängigkeit von einem Betriebssignal des Betätigungsgliedes steuert. In einem Sperrzustand der Steuereinheit sperrt diese die Zufuhr von elektrischer Energie zum Elektromotor unabhängig von dem Betriebssignal des Betätigungsgliedes. Erst wenn die Steuereinheit ein Steuersignal empfängt, wird die Steuereinheit aus dem Betriebszustand in einen Bereitschaftszustand wechseln, um eine Energiezufuhr zu dem Elektromotor freizugeben. Dieses Steuersignal wird aus einer Kombination eines Betätigungshubes des Betätigungsgliedes und einer Betätigungszeit des Betätigungsgliedes abgeleitet, wobei ein Steuersignal dann generiert wird, wenn innerhalb einer vorgegebenen Betätigungszeit das Betätigungsglied in einer Betätigungsrichtung über eine Hubschwelle hinaus einen vorgegebenen Betätigungshub durchfahren hat, um dann entgegen der Betätigungsrichtung einen vorgegebenen Rückstellhub zu durchfahren.

Um dem Benutzer das Überfahren der Hubschwelle anzuzeigen, ist vorgesehen, dass an der Hubschwelle eine erhöhte Federkraft gegen das Betätigungsglied wirkt. Der Benutzer kann somit die Hubschwelle ertasten.

In einer anderen Ausgestaltung kann im Gehäuse des Handgriffs konstruktiv eine Schaltmulde ausgebildet sein, welche der Hubschwelle zugeordnet ist. Mit Eindrücken des Betätigungsgliedes in die Schaltmulde wird die Hubschwelle überschritten.

Dem Betätigungsglied ist vorteilhaft ein Griffsensor für eine Benutzerhand zugeordnet, wobei der Griffsensor in besonderer Ausgestaltung als Betätigungssperre für das Betätigungsglied ausgebildet ist.

In einfacher Weise kann der Stellweg des Betätigungsgliedes durch einen Schalter und/oder durch ein Potentiometer erfasst werden. Wird nur ein Schalter verwendet, wird mit Öffnen oder Schließen eines Kontaktes des Schalters das Erreichen eines bestimmten Stellweges des Betätigungsgliedes angezeigt. Dies kann sowohl beim Betätigungshub als auch beim Rückstellhub sein.

Wird anstelle des Schalters ein Potentiometer zur Erfassung des Stellweges des Betätigungsgliedes verwendet, kann der Steuereinheit ein dem Stellweg des Betätigungsgliedes entsprechendes Signal bereitgestellt werden; dieses Signal kann z. B. ein dem Stellweg proportionales Signal sein.

In bevorzugter Ausführungsform ist zur Erfassung des Stellweges des Betätigungsgliedes ein Schalter mit einem Potentiometer kombiniert. Ein erster Stellweg - z. B. ein vorgegebener Betätigungshub - wird durch Öffnen oder Schließen eines Kontaktes des Schalters angezeigt; der weitere Stellweg - z. B. ein weiterer Betätigungshub - wird dann durch ein dem Stellweg z. B. proportionales Signal der Steuereinheit gemeldet.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: in schematischer Darstellung eine elektrische Motorkettensäge,
- Fig. 2: in schematischer Darstellung eine elektrische Heckenschere,
- Fig. 3: in schematischer Darstellung ein in einem Handgriff angeordnetes Betätigungsglied,
- Fig. 4: eine schematische Darstellung des Betätigungshubes eines Betätigungsgliedes über der Zeit,
- Fig. 5: in schematischer Darstellung ein Ablaufdiagramm zur Erzeugung eines Steuersignals zur Inbetriebnahme des Arbeitsgerätes,
- Fig. 6: in schematischer Darstellung ein Ablaufdiagramm zur Inbetriebnahme eines elektrischen Arbeitsgerätes.

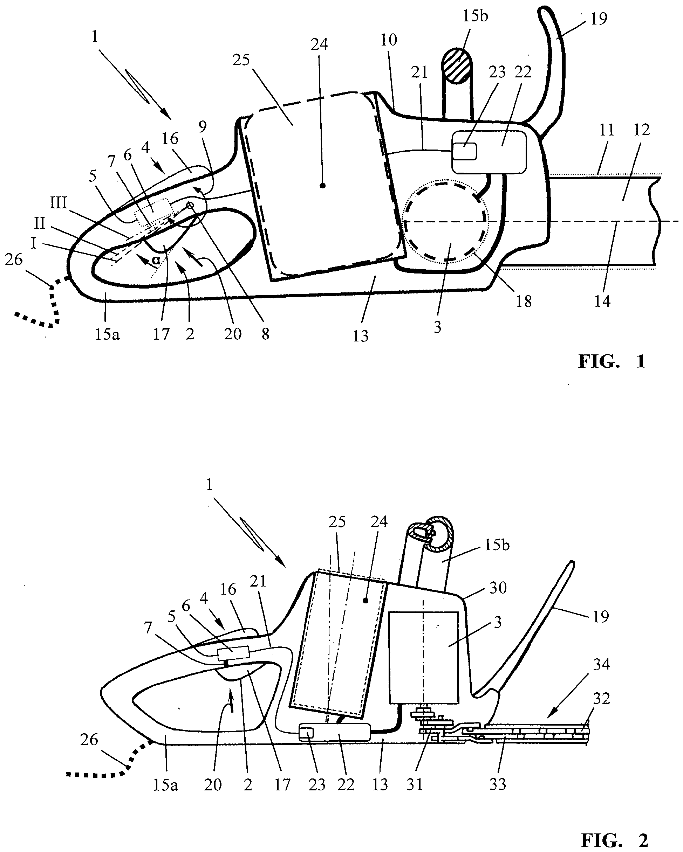

In den Figuren 1 und 2 sind als Beispiel eines handgeführten Arbeitsgerätes mit einem Elektromotor 3 eine Motorkettensäge 10 und eine Heckenschere 30 wiedergegeben. Andere handgeführte Arbeitsgeräte können z. B. ein Blasgerät, ein Freischneider, eine elektrische Schere oder dgl. sein.

Das tragbare, handgeführte Arbeitsgerät 1 in Fig. 1 zeigt in schematischer Darstellung eine Motorkettensäge 10, in deren Gehäuse 13 ein Elektromotor 3 vorgesehen ist. Der Elektromotor 3 treibt - vorzugsweise direkt - eine Sägekette 11 an, die auf einer Führungsschiene 12 umlaufend geführt ist.

Das Gehäuse 13 des Arbeitsgerätes 1 weist im Ausführungsbeispiel einen in Richtung der Längsachse 14 des Arbeitsgerätes sich erstreckenden hinteren Handgriff 15a auf. Am hinteren Handgriff 15a ist ein Griffsensor 4 in Form eines Sperrhebels 16 vorgesehen; der Sperrhebel 16 wirkt mit einem Gashebel 17 zusammen, der das Betätigungsglied 2 zur Inbetriebnahme des Elektromotors 3 bildet. Die Inbetriebnahme des Elektromotors 3 entspricht der Inbetriebnahme des Arbeitsgerätes 1.

Im Ausführungsbeispiel nach Fig. 1 wirkt das Betätigungsglied 2 auf ein elektrisches Stellglied 5, welches vorzugsweise als elektrischer Schalter 6, vorzugsweise mit einem integrierten Potentiometer ausgebildet ist. Das elektrische Stellglied 5 umfasst einen Stellstift 7, der von dem Betätigungsglied 2 bzw. dem Gashebel 17 betätigt wird. Über den Schalter 6 und/oder ein Potentiometer kann in einfacher Weise der Stellweg wie der Betätigungshub 27 des Betätigungsgliedes 2 oder dessen Rückstellhub 28 erfasst werden. Durch einen Schalter und/oder ein Potentiometer werden bei dem Betätigungshub 27 entsprechende elektrische Signale erzeugt, die in einfacher Weise weiterverarbeitet und/oder ausgewertet werden können. Wird nur ein Schalter 6 verwendet, wird mit Öffnen oder Schließen eines Kontaktes des Schalters 6 das Erreichen eines bestimmten Stellweges des Betätigungsgliedes 2 angezeigt. Dies kann sowohl beim Betätigungshub 27 als auch beim Rückstellhub 28 sein.

Wird anstelle des Schalters 6 ein Potentiometer zur Erfassung des Stellweges des Betätigungsgliedes 2 verwendet, kann der Steuereinheit 22 ein dem Stellweg des Betätigungsgliedes 2 entsprechendes Signal bereitgestellt werden; dieses Signal kann z. B. ein dem Stellweg des Betätigungsgliedes 2 proportionales Signal sein.

Wird zur Erfassung des Stellweges des Betätigungsgliedes 2 ein Schalter 6 mit einem Potentiometer kombiniert, z. B. in einem gemeinsamen Gehäuse angeordnet, kann ein erster Stellweg - z. B. ein vorgegebener Betätigungshub 27 - durch Öffnen oder Schließen eines Kontaktes des Schalters 6 angezeigt werden; der weitere Stellweg - z. B. ein weiterer Betätigungshub 27 - wird dann durch ein dem Stellweg z. B. proportionales Signal der Steuereinheit 22 gemeldet und in dieser ausgewertet.

Das elektrische Stellglied 5 ist im Handgriff 15 fest angeordnet; das Betätigungsglied 2 ist um eine Schwenkachse 8 in Richtung des Doppelpfeils 9 verschwenkbar. Ein Niederdrücken des Betätigungsgliedes 2 in Betätigungsrichtung 20 drückt den Stellstift 7 nieder, so dass der Schalter 6 betätigt wird und - über den anschließenden Betätigungshub 27 - das integrierte Potentiometer verstellt wird.

Das elektrische Stellglied 5 ist über eine elektrische Signalleitung 21 mit einer Steuereinheit 22 verbunden. Das Betriebssignal des elektrischen Stellgliedes 5 wird in einer Auswerteeinheit 23 ausgewertet. Die Auswerteeinheit 23 gibt an die Steuereinheit 22 ein Steuersignal ab, wenn vorgegebene Auswertebedingungen erfüllt sind.

Die Steuereinheit 22 steuert die Energiezufuhr von einer Spannungsquelle 24, die im Ausführungsbeispiel nach Fig. 1 von einem Akkupack 25 gebildet ist. Anstelle des Akkupacks 25 kann das Arbeitsgerät 1 über eine Netzleitung 26 mit einem externen Spannungsnetz verbunden sein.

Die Steuereinheit 22 führt dem Elektromotor 3 die zum Betrieb notwendige Energie in Abhängigkeit von der Betriebsstellung des Betätigungsgliedes 2 zu.

Die Ausgangswelle des Elektromotors 3 kann über eine nicht näher dargestellte Sicherheitsbremse 18 gebremst werden. Als Auslöser für die Sicherheitsbremse 18 dient ein Handschutz 19, der vor einem vorderen Handgriff 15b angeordnet ist. Der vordere Handgriff 15b übergreift das Gehäuse 13.

Das handgeführte Arbeitsgerät nach Fig. 2 ist eine Heckenschere 30, die vom Grundaufbau dem nach Fig. 1 entspricht; für gleiche Teile sind gleiche Bezugszeichen verwendet.

Die Heckenschere 30 weist ein Gehäuse 13 auf, in dem ein Elektromotor 3 angeordnet ist. Der Elektromotor 3 treibt, bevorzugt über einen Exzenterantrieb 31, Messerblätter 32, 33 an, die an einem Messerbalken 34 geführt und gehalten sind. Die Heckenschere 30 weist einen hinteren Handgriff 15a auf, in dem ein Betätigungsglied 2 für ein elektrisches Stellglied 5 angeordnet ist. Das elektrische Stellglied 5 ist von einem Schalter 6 gebildet, in dem darüber hinaus vorzugsweise ein Potentiometer integriert ist. Über das Potentiometer gibt das elektrische Stellglied ein Betriebssignal in Abhängigkeit vom Hub des Betätigungsgliedes 2 ab.

Das elektrische Stellglied 5 ist über eine elektrische Signalleitung 21 mit einer Steuereinheit 22 verbunden. Das Betriebssignal des elektrischen Stellgliedes 5 wird in einer Auswerteeinheit 23 ausgewertet. Die Auswerteeinheit 23 gibt an die Steuereinheit 22 ein Steuersignal ab, wenn das Betätigungsglied in einer vorgegebenen Abfolge von Bewegungen betätigt wird.

Die Steuereinheit 22 steuert die Energiezufuhr von einer Spannungsquelle 24, die im Ausführungsbeispiel nach Fig. 2 von einem Akkupack 25 gebildet ist. Anstelle des Akkupacks 25 kann das Arbeitsgerät 1 über eine Netzleitung 26 mit einem externen Spannungsnetz verbunden sein.

Die Steuereinheit 22 führt dem Elektromotor 3 die zum Betrieb notwendige Energie in Abhängigkeit von der Betriebsstellung des Betätigungsgliedes 2 zu.

In den Ausführungsbeispielen nach den Figuren 1 und 2 dreht das Betätigungsglied 2 um eine Schwenkachse 8, weshalb der Betätigungshub 27 einem Drehwinkel α um die Schwenkachse 8 entspricht, wie in Fig. 1 dargestellt.

Das Betätigungsglied 2 kann aber auch ein translatorisch bewegtes Betätigungsglied oder ein längs einer beliebigen Kurvenbahn geführtes Betätigungsglied sein.

Wird das elektrische Arbeitsgerät 1 in Betrieb genommen, so wird zunächst die Spannungsquelle 24 aktiviert; dies kann durch Einschieben des Akkupacks 25 in den Aufnahmeschacht des Gehäuses 13 erfolgen oder durch Einstecken der Netzleitung 26 in eine Steckdose.

Mit Bereitstellung der Spannungsquelle 24 liegt am elektrischen Stellglied 5 ebenso Spannung an wie an der Steuereinheit 22. Der Elektromotor 3 ist spannungsfrei; der Elektromotor 3 ist aus.

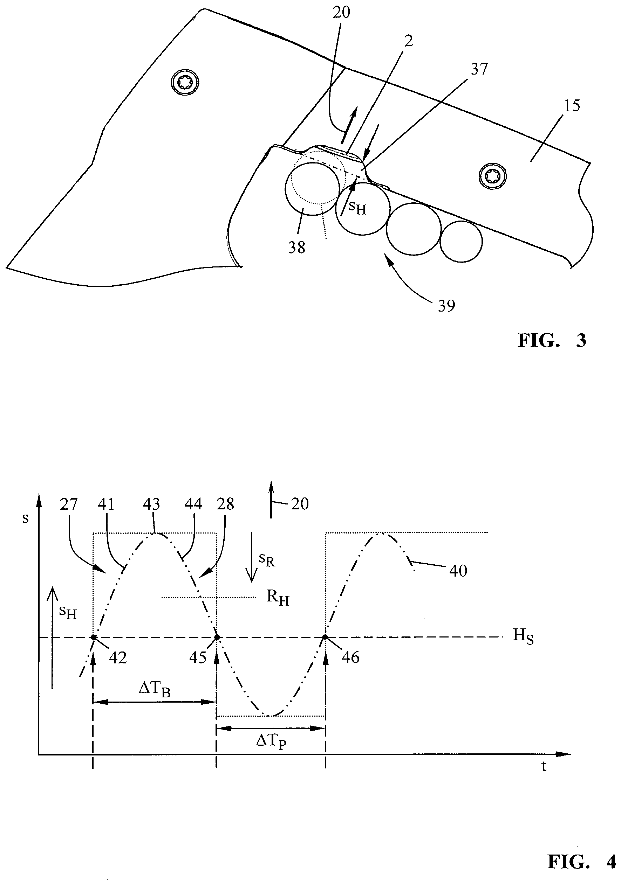

Um zu verhindern, dass ein unbeabsichtigtes Niederdrücken des Betätigungsgliedes 2 zu einem Anlaufen des Elektromotors 3 und damit zu einem Anlaufen des Werkzeugs des Arbeitsgerätes 1 führt, muss das Betätigungsglied 2 in einer vorgegebenen Weise bedient werden. Dies ist beispielhaft in Fig. 4 wiedergegeben.

Nach Aktivierung der Spannungsquelle 24 befindet sich die Steuereinheit 22 im Sperrzustand. Der Elektromotor 3 steht und ist spannungsfrei. In diesem Sperrzustand sperrt die Steuereinheit 22 die Zufuhr von elektrischer Energie von der Spannungsquelle 24 zum Elektromotor 3, unabhängig davon, welche Stellung das Betätigungsglied 2 hat und welches Betriebssignal über die Signalleitung 21 der Steuereinheit 22 bzw. der Auswerteeinheit 23 zugeführt wird.

Um die Steuereinheit 22 in einen Bereitschaftszustand zu schalten, damit eine Energiezufuhr zu dem Elektromotor 3 möglich wird, muss das Betätigungsglied 2 entsprechend der Darstellung in Fig. 4 getastet werden, d. h., bewegt werden.

In Fig. 4 ist eine Hubschwelle Hs des elektrischen Stellgliedes 5 wiedergegeben; diese Hubschwelle H_{S} kann das Einschalten des Schalters 6 sein. Bei Erreichen der Hubschwelle H_{S} wird der Schalter 6 des elektrischen Stellgliedes 5 betätigt, vorzugsweise geschlossen.

Die Hubkurve 40 in Fig. 4 gibt die Bewegung des Betätigungsgliedes 2 in Betätigungsrichtung 20 wieder. Mit Niederdrücken des Betätigungsgliedes 2 wird der aufsteigende Ast 41 der Hubkurve 40 durchfahren, wobei im Punkt 42 der Schalter 6 des elektrischen Stellgliedes 5 schaltet. Die Hubschwelle Hs wird bis zu einem Maximum 43 überfahren, wobei das Maximum der Endanschlag des im elektrischen Stellglied 5 integrierten Potentiometers sein kann. Nach Erreichen eines Maximums 43 des Betätigungshubes 27 wird in einem Rückstellhub 28 der abfallende Ast 44 durchlaufen, bis ein vorgegebener Rückstellhub erreicht ist.

Vorteilhaft entspricht der Betätigungshub 27 vom Punkt 42 bis zum Maximum 43 dem Rückstellhub 28 vom Maximum 43 bis zum Schnittpunkt 45 der Hubkurve 40 mit der Hubschwelle H_{S}. Der Betätigungshub 27 entspricht dem Rückstellhub 28.

Es ist vorgesehen, dass der Betätigungshub 27 und der Rückstellhub 28 innerhalb einer Betätigungszeit ΔT_{B} ausgeführt sein muss. Dies kann in einfacher Weise dadurch überwacht werden, dass der im elektrischen Stellglied 5 vorgesehene Schalter 6 im Punkt 42 z. B. einschaltet und im Punkt 45 z. B. ausschaltet. Eine auftretende Schalthysterese des Schalters 6 kann vernachlässigt werden.

Dieses Bewegen des Bewegungsgliedes 2 innerhalb einer vorgesehenen Pausenzeit ΔT_{P} wird von der Auswerteeinheit 23 überwacht. Ist innerhalb der Betätigungszeit ΔT_{B} sowohl der Betätigungshub 27 als auch der Rückstellhub 28 ausgeführt, gibt die Auswerteeinheit 23 ein Steuersignal an die Steuereinheit 22 ab, um diese aus ihrem Sperrzustand in einen Bereitschaftszustand zu schalten, in dem eine Energiezufuhr zu dem Elektromotor 3 in Abhängigkeit der Stellung des Betätigungsgliedes 2 möglich ist.

Um aus dem Bereitschaftszustand in den Betriebszustand der Steuereinheit 22 zu gelangen und den Elektromotor 3 in Betrieb zu nehmen, muss innerhalb einer vorgegebenen Pausenzeit ΔT_{P} nach dem Auftreten des Steuersignals erneut die Hubschwelle H_{S} überschritten werden, was in Fig. 4 in Punkt 46 erfolgt. Wird der Punkt 46 der Hubkurve 40 innerhalb der vorgegebenen Pausenzeit ΔT_{P} erreicht, führt die Steuereinheit 22 im Betriebszustand dem Elektromotor 3 Energie zu und nimmt somit den Elektromotor 3 in Betrieb. Das Werkzeug des Arbeitsgerätes wird angetrieben. Der Benutzer kann mit dem Arbeitsgerät 1 arbeiten.

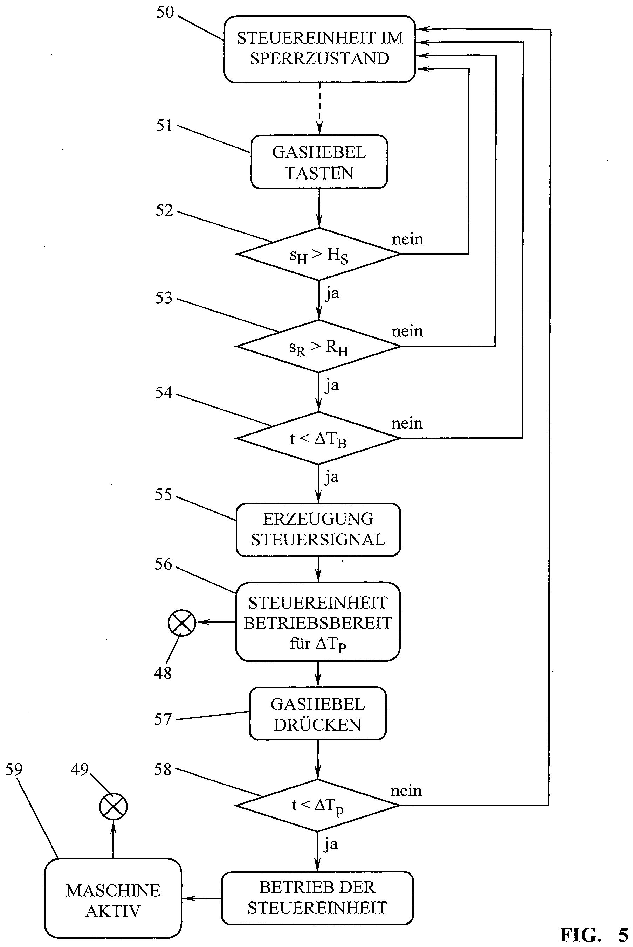

In Fig. 5 ist ein Ablaufdiagramm wiedergegeben, welches den Ablauf zur Aktivierung der Steuereinheit 22 aus dem Sperrzustand in den Betriebszustand wiedergibt.

Die Steuereinheit 22 ist im Feld 50 in Sperrzustand. Durch Tasten des Gashebels 17, wie im Feld 51 wiedergegeben, wird das Betätigungsglied 2 in der in Fig. 4 vorgesehenen Weise bewegt, um die Auswerteeinheit 23 zu veranlassen, ein Steuersignal an die Steuereinheit 22 abzugeben.

Zunächst muss der Weg S_{H} des Betätigungshubes 27 so groß sein, dass die Hubschwelle Hs überschritten wird. Dies wird in der Entscheidungsraute 52 abgefragt.

Ist die Bedingung erfüllt, wonach der Betätigungshub 27 die Hubschwelle H_{S} überschritten hat, wird überprüft, ob der Rückstellhub 28 einen vorgegebenen Weg RH überschreitet. Der Rückstellhub 28 kann so groß wie der Betätigungshub 27 sein. Die Schwelle R_{H} des Rückstellhubes 28 kann der Hubschwelle H_{S} des Betätigungshubes 27 entsprechen.

Ist auch die Bedingung erfüllt, dass der Rückstellhub 28 einen vorgegebenen Weg S_{R} durchlaufen und die Schwelle überschritten hat, wird abgeprüft, ob der Betätigungshub 27 und der Rückstellhub 28 innerhalb einer Betätigungszeit ΔT_{B} erfolgt ist. Dies wird in der Entscheidungsraute 54 abgefragt. Ist dies der Fall, erzeugt die Auswerteeinheit 23 ein Steuersignal, was im Feld 55 wiedergegeben ist.

Auf das Steuersignal der Auswerteeinheit 23 schaltet die Steuereinheit 22 betriebsbereit, jedoch lediglich für eine vorgegebene Pausenzeit ΔT_{P}; dies ist im Feld 56 wiedergegeben.

Der Bereitschaftszustand der Steuereinheit wird vorzugsweise durch eine optische Anzeige 48 angezeigt; die optische Anzeige 48 ist zweckmäßig eine LED.

Der Bereitschaftszustand der Steuereinheit 22 wird ausweislich Feld 56 nur für eine vorgegebene Pausenzeit ΔT_{P} aufrechterhalten. Diese Zeitspanne kann 1 Sekunde bis 5 Sekunden lang sein.

Wird der Gashebel 17 bzw. das Betätigungsglied 2 gedrückt, was im Feld 57 angegeben ist, wird überprüft, ob dies innerhalb der vorgegebenen Pausenzeit ΔT_{P} erfolgt. Ist dies der Fall, wird entsprechend der Entscheidungsraute 58 die Steuereinheit 22 in Betrieb genommen; die Maschine ist aktiv, wie im Feld 59 angezeigt. Die aktive Maschine kann über eine optische Anzeige 49 angezeigt werden, die vorteilhaft als LED ausgeführt ist.

Zweckmäßig sind die optische Anzeige 48 und die optische Anzeige 49 durch ein und dieselbe LED gebildet. Ist die Steuereinheit betriebsbereit, wird die LED blinken; ist die Maschine aktiv, leuchtet die LED dauerhaft.

Wird in den Entscheidungsrauten 52, 53, 54 und 58 festgestellt, dass die abgefragte Bedingung nicht erfüllt ist, verzweigt die Entscheidungsraute 52, 53, 54 oder 58 über einen "nein"-Zweig zurück zum Feld 50; die Steuereinheit 22 fällt in den Sperrzustand zurück.

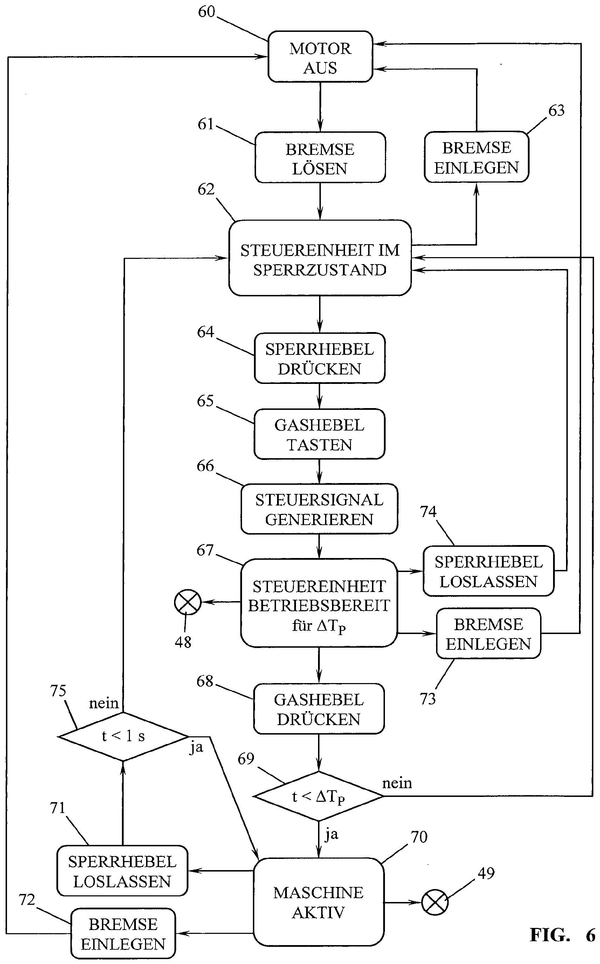

Am Beispiel der Motorkettensäge 10 nach Fig. 1 wird unter Bezug auf Fig. 6 die Inbetriebnahme des Arbeitsgerätes 1 beispielhaft erläutert.

Wie im Ausgangsfeld 60 angegeben, ist der Motor 3 aus. Wird durch Betätigen des Handschutzes 19 die Sicherheitsbremse 18 gelöst, wie im Feld 61 angegeben, geht die Steuereinheit 22 in ihren Sperrzustand. Dies ist im Feld 62 gezeigt. Wird die Bremse erneut eingelegt (Feld 63), bleibt der Motor 3 aus; das Feld 63 verzweigt zurück auf das Feld 60.

Ausgehend von der Steuereinheit 22 im Sperrzustand, wie im Feld 62 wiedergegeben, muss zunächst der Sperrhebel 16 betätigt werden, um das Betätigungsglied 2, im Ausführungsbeispiel der Gashebel 17, freizugeben. Das Drücken des Sperrhebels 16 ist im Feld 64 angegeben. Nachdem das Betätigungsglied 2, im Ausführungsbeispiel der Gashebel 17, frei ist, muss dieser in einem vorgegebenen Bewegungsablauf betätigt werden, wie in Verbindung mit Fig. 5 beschrieben wurde. Dies ist im Feld 65 mit "Gashebel tasten" wiedergegeben.

Ist der Gashebel 17 bzw. das Betätigungsglied 2 erfolgreich in vorgegebener Weise bewegt worden, wird von der Auswerteeinheit 23 ein Steuersignal generiert, wie im Feld 66 gezeigt.

Das Steuersignal schaltet die Steuereinheit 22 in einen Bereitschaftszustand für eine vorgegebene Pausenzeit ΔT_{P}. Dies ist im Feld 67 wiedergegeben.

Innerhalb der vorgegebenen Pausenzeit ΔT_{P} muss der Gashebel 17 bzw. das Betätigungsglied 2 zur Inbetriebnahme des Elektromotors 3 gedrückt werden, wie im Feld 68 aufgeführt. Das Betätigen des Gashebels 17 innerhalb der zulässigen Pausenzeit ΔT_{P} wird über die Entscheidungsraute 69 abgefragt. Wurde die vorgegebene Pausenzeit ΔT_{P} nicht überschritten, wird der Elektromotor 3 von der Steuereinheit 22 in Betrieb genommen; die Maschine ist aktiv.

Sowohl der Bereitschaftszustand der Steuereinheit gemäß Feld 67 als auch die aktive Maschine gemäß Feld 70 wird durch eine optische Anzeige 48, 49 dem Benutzer signalisiert; die optischen Anzeigen 48, 49 können durch eine gemeinsame LED gebildet sein, die in einem ersten Zustand blinkt und in einem zweiten Zustand dauerhaft leuchtet.

Lässt der Benutzer im Bereitschaftszustand der Steuereinheit 22 gemäß Feld 67 den Sperrhebel 16 los, geht die Steuereinheit 22 in den Sperrzustand zurück.

Wird im Bereitschaftszustand der Steuereinheit die Sicherheitsbremse 18 eingelegt, wird der Elektromotor 3 dauerhaft ausgeschaltet; erst nach gelöster Bremse (Feld 61) geht die Steuereinheit 22 wieder in den Sperrzustand (Feld 62).

Wird gemäß Feld 68 der Gashebel 17 bzw. das Betätigungsglied 2 außerhalb der vorgegebenen Pausenzeit ΔT_{P} gedrückt, wird entsprechend dem Zweig "nein" die Steuereinheit 22 wieder in den Sperrzustand zurückfallen.

Ist die Maschine gemäß Feld 70 aktiv und lässt der Benutzer den Sperrhebel 16, der als Griffsensor 4 dient, los, wie dies im Feld 71 angegeben ist, kann die Steuereinheit 22 unverzüglich in den Sperrzustand zurückkehren; in diesem Sperrzustand wird die Steuereinheit 22 die Zufuhr von elektrischer Energie zum Elektromotor 3 unabhängig von einem Betriebssignal des Betätigungsgliedes 2 sperren.

Vorteilhaft ist zwischen dem Feld 71 und dem Feld 62 ein Zwischenfeld 75 vorgesehen, welches ein Zeitglied wiedergibt. Lässt der Benutzer den Sperrhebel 16 als Griffsensor 4 los, wird das Zeitglied des Zwischenfeldes 75 gestartet. Erst nach Ablauf einer vorgegebenen Zeitspanne, die insbesondere eine Sekunde sein kann, wird die Steuereinheit in den Sperrzustand zurückgeschaltet. Dadurch wird dem Benutzer die Möglichkeit gegeben, die Griffposition seiner Hand am Bedienhandgriff zu verändern, ohne dass die Steuereinheit in den Sperrzustand zurückfällt. Dies erleichtert das Arbeiten mit wechselnden Arbeitspositionen.

Wird bei aktiver Maschine gar die Sicherheitsbremse 18 eingelegt, erfolgt unverzüglich ein vollständiges Ausschalten des Motors; das Feld 72 verzweigt zum Feld 60 zurück. Erst wenn die Bremse gelöst wird (Feld 61), geht die Steuereinheit wieder in den Sperrzustand gemäß Feld 62.

Wird bei betriebsbereiter Steuereinheit 22 (Feld 67) der Sperrhebel 16 losgelassen, wie Feld 74 wiedergibt, geht die Steuereinheit 22 in den Sperrzustand.

Wird bei in Bereitschaftszustand geschalteter Steuereinheit 22 (Feld 67) die Sicherheitsbremse 18 eingelegt, wie im Feld 73 wiedergegeben, wird in das Ausgangsfeld 60 verzweigt. Der Elektromotor ist ausgeschaltet.

Die Hubschwelle Hs des Betätigungsgliedes 2 kann durch haptische Maßnahmen dem Benutzer angezeigt werden. So kann zweckmäßig mit der Hubschwelle H_{S} auf das Betätigungsglied 2 eine erhöhte Federkraft wirken, so dass der Benutzer beim Betätigen des Betätigungsgliedes 2 in Betätigungsrichtung 20 die Hubschwelle Hs "fühlen" kann. Dadurch ist ein bewusstes Einschalten des Arbeitsgerätes erleichtert.

In einer anderen Ausgestaltung der Erfindung kann - wie in Fig. 3 wiedergegeben - eine Schaltmulde 37 im Handgriff 15 ausgebildet sein; die Schaltmulde 37 hat eine Größe, die etwa der Breite eines Fingers 38 einer Benutzerhand 39 entspricht. Um das Arbeitsgerät in Betrieb zu nehmen, muss der Benutzer mit einem Finger 38 bewusst in die Schaltmulde 37 eingreifen, um das Betätigungsglied 2 über eine Hubschwelle H_{S} hinaus in Betätigungsrichtung 20 zu bewegen. Der Benutzer muss somit zur Inbetriebnahme des Gerätes gezielt bestimmte Handlungen ausführen, um das Arbeitsgerät in Betrieb nehmen zu können; dadurch kann ein unbeabsichtigtes Einschalten des Arbeitsgerätes vermieden werden.

Eine zweckmäßige Betätigungszeit ΔT_{H}, innerhalb der ein Betätigungshub 27 und ein Rückstellhub 28 ausgeführt sein müssen, liegt im Bereich zwischen 50 Millisekunden bis 1 Sekunde. Dabei kann der Weg S_{H} des Betätigungshubes 40% bis 90% des konstruktiven Betätigungshubes 27 des Betätigungsgliedes 2 sein. Dieser konstruktive Betätigungsweg ist in Fig. 1 zwischen den Stellungen I und II gegeben. Die Stellung III gibt eine mögliche Hubschwelle H_{S} wieder.

Die Hubschwelle H_{S} kann an beliebiger Stelle innerhalb des konstruktiven Betätigungsweges vorgesehen sein. Im Ausführungsbeispiel nach Fig. 3 wird die Hubschwelle gegen Ende des Betätigungshubes 27 liegen; im Ausführungsbeispiel nach Fig. 4 kann die Hubschwelle H_{S} etwa in der Mitte des Betätigungshubes 27 liegen.

## Patentansprüche

1. Verfahren zur Inbetriebnahme eines handgeführtes Arbeitsgerätes mit einem Elektromotor (3), mit einer Spannungsversorgung (24) zum Betrieb des Elektromotors (3) und einem an einem Handgriff (15) des Arbeitsgerätes (1) vorgesehenen, vom Benutzer zu bedienenden manuellen Betätigungsglied (2) zur Inbetriebnahme des Elektromotors (3), wobei das Betätigungsglied (2) mit einer Steuereinheit (22) verbunden ist, und die Steuereinheit (22) die Energiezufuhr von der Spannungsquelle (24) zu dem Elektromotor (3) in Abhängigkeit von einem Betriebssignal des Betätigungsgliedes (2) steuert, und die Steuereinheit (22) in einem Sperrzustand die Zufuhr von elektrischer Energie zum Elektromotor (3) unabhängig von dem Betriebssignal des Betätigungsgliedes (2) sperrt, wobei die Steuereinheit (22) nach Empfang eines Steuersignals die Steuereinheit (22) aus dem Sperrzustand in einen Bereitschaftszustand schaltet, um eine Energiezufuhr zu dem Elektromotor (3) freizugeben,
**dadurch gekennzeichnet, dass** das Steuersignal aus einer Kombination eines Betätigungshubes (27) des Betätigungsgliedes (2) und einer Betätigungszeit (ΔT_{B}) des Betätigungsgliedes (2) abgeleitet wird, wobei ein Steuersignal dann generiert wird, wenn innerhalb einer vorgegebenen Betätigungszeit (ΔT_{B}) das Betätigungsglied (2) in einer Betätigungsrichtung (20) über eine Hubschwelle (Hs) hinaus einen vorgegebenen Betätigungshub (27) und entgegen der Betätigungsrichtung (20) einen vorgegebenen Rückstellhub (28) durchfahren hat.

2. Verfahren nach Anspruch 1,
**dadurch gekennzeichnet, dass** innerhalb des vorgegebenen Rückstellhubs (28) die Hubschwelle (H_{S}) entgegen der Betätigungsrichtung (20) überfahren wird.

3. Verfahren nach Anspruch 1 oder 2,
**dadurch gekennzeichnet, dass** das Steuersignal erst dann generiert wird, wenn nach dem Rückstellhub (28) die Hubschwelle (H_{S}) ein zweites Mal in Betätigungsrichtung (20) überfahren wird.

4. Verfahren nach Anspruch 3,
**dadurch gekennzeichnet, dass** das Steuersignal erst dann generiert wird, wenn das zweite Überfahren der Hubschwelle (Hs) innerhalb einer vorgegebenen Pausenzeit (ΔT_{P}) nach dem Überfahren der Hubschwelle (H_{S}) entgegen der Betätigungsrichtung (20) erfolgt.

5. Verfahren nach einem der Ansprüche 1 bis 4,
**dadurch gekennzeichnet, dass** die Betätigungszeit (ΔT_{B}) 50 ms bis 1 Sekunde beträgt.

6. Verfahren nach einem der Ansprüche 1 bis 5,
**dadurch gekennzeichnet, dass** der Betätigungshub (27) 40% bis 90% des konstruktiven Betätigungshubes (I; III) des Betätigungsgliedes (2) entspricht.

7. Verfahren nach einem der Ansprüche 1 bis 6,
**dadurch gekennzeichnet, dass** die Steuereinheit (22) in den Sperrzustand zurückschaltet, wenn innerhalb einer vorgegebenen Pausenzeit (ΔT_{P}) nach dem Auftreten des Steuersignals kein Betriebssignal eingeht.

8. Verfahren nach Anspruch 7,
**dadurch gekennzeichnet, dass** die Pausenzeit (ΔT_{P}) zwischen 1 und 5 Sekunden liegt.

9. Verfahren nach einem der Ansprüche 1 bis 8,
**dadurch gekennzeichnet, dass** das Steuersignal nur dann generiert wird, wenn ein am Handgriff (15, 15a) angeordneter Griffsensor (4) ein Anwesenheitssignal für die Hand eines Benutzers abgibt.

10. Verfahren nach Anspruch 9,
**dadurch gekennzeichnet, dass** die Steuereinheit (22) in den Sperrzustand zurückschaltet, wenn das Anwesenheitssignal des Griffsensors (4) erlischt.

11. Verfahren nach Anspruch 10,
**dadurch gekennzeichnet, dass** die Steuereinheit (22) erst nach Ablauf einer vorgegebenen Zeitspanne in den Sperrzustand zurückschaltet, und das Anwesenheitssignal des Griffsensors (4) weiterhin erloschen ist.

12. Verfahren nach einem der Ansprüche 1 bis 11,
**dadurch gekennzeichnet, dass** der Betätigungshub (27) des Betätigungsgliedes (2) und der Rückstellhub (28) des Betätigungsgliedes (2) gleich sind.

13. Verfahren nach einem der Ansprüche 1 bis 12,
**dadurch gekennzeichnet, dass** der Bereitschaftszustand durch eine optische Anzeige (48) angezeigt ist.

14. Verfahren nach Anspruch 13,
**dadurch gekennzeichnet, dass** die optische Anzeige (48) eine LED ist.

15. Handgeführtes Arbeitsgerät mit einem Elektromotor (3), mit einer Spannungsversorgung (24) zum Betrieb des Elektromotors (3) und einem an einem Handgriff (15) des Arbeitsgerätes (1) vorgesehenen, vom Benutzer zu bedienenden manuellen Betätigungsglied (2) zur Inbetriebnahme des Arbeitsgerätes (1), wobei das Betätigungsglied (2)mit einer Steuereinheit (22) verbunden ist, und die Steuereinheit (22) die Energiezufuhr von der Spannungsquelle (24) zu dem Elektromotor (3) in Abhängigkeit von einem Betriebssignal des Betätigungsgliedes (2) steuert, und in einem Sperrzustand die Zufuhr von elektrischer Energie zum Elektromotor (3) unabhängig von dem Betriebssignal des Betätigungsgliedes (2) sperrt, wobei die Steuereinheit (22) nach Empfang eines Steuersignals die Steuereinheit (22) aus dem Sperrzustand in einen Bereitschaftszustand schaltet, um eine Energiezufuhr zu dem Elektromotor (3) freizugeben,
**dadurch gekennzeichnet, dass** das Steuersignal aus einer Kombination eines Betätigungshubes (27) des Betätigungsgliedes (2) und einer Betätigungszeit (ΔT_{B}) des Betätigungsgliedes (2) abgeleitet wird, wobei ein Steuersignal () dann generiert wird, wenn innerhalb einer vorgegebenen Betätigungszeit (ΔT_{B}) das Betätigungsglied (2) in einer Betätigungsrichtung (20) über eine Hubschwelle (H_{S}) hinaus einen vorgegebenen Betätigungshub (27) und entgegen der Betätigungsrichtung einen vorgegebenen Rückstellhub (28) durchfahren hat.

16. Arbeitsgerät nach Anspruch 15,
**dadurch gekennzeichnet, dass** in der Hubschwelle (H_{S}) eine erhöhte Federkraft gegen das Betätigungsglied (2) wirkt.

17. Arbeitsgerät nach Anspruch 15 oder 16,
**dadurch gekennzeichnet, dass** der Hubschwelle (H_{S}) des Betätigungsgliedes (2) eine im Gehäuse des Handgriffs (15) konstruktiv ausgebildete Schaltmulde (37) zugeordnet ist.

18. Arbeitsgerät nach einem der Ansprüche 15 bis 17,
**dadurch gekennzeichnet, dass** dem Betätigungsglied (2) ein Griffsensor (4) für eine Benutzerhand (39) zugeordnet ist.

19. Arbeitsgerät nach Anspruch 18,
**dadurch gekennzeichnet, dass** der Griffsensor (4) als Betätigungssperre für das Betätigungsglied (2) ausgebildet ist.

20. Arbeitsgerät nach einem der Ansprüche 15 bis 19,
**dadurch gekennzeichnet, dass** der Stellweg des Betätigungsgliedes (2) durch einen Schalter und/oder durch ein Potentiometer erfasst ist.

## Claims

1. Method for starting up a hand-guided working implement with an electric motor (3), with a voltage supply (24) for the operation of the electric motor (3) and with a manual actuating element (2) provided at a handle (15) of the working implement (1) and to be operated by the user for starting up the electric motor (3), wherein the actuating element (2) is connected to a control unit (22) and the control unit (22) controls the energy supply from the voltage source (24) to the electric motor (3) in response to an operating signal of the actuating element (2) and the control unit (22) blocks the supply of electric energy to the electric motor (3) independently of the operating signal of the actuating element (2) in a blocking state, wherein the control unit (22), on receipt of a control signal, switches from the blocking state into a standby state for enabling an energy supply to the electric motor (3),
**characterised in that** the control signal is derived from a combination of an actuating stroke (27) of the actuating element (2) and an actuating time (ΔT_{B}) of the actuating element (2), wherein a control signal is generated if within a preset actuating time (ΔT_{B}) the actuating element (2) has passed through a preset actuating stroke (27) beyond a stroke threshold (H_{S}) in an actuating direction (20) and a preset return stroke (28) against the actuating direction (20).

2. Method according to claim 1,
**characterised in that** the stroke threshold (H_{S}) is overshot against the actuating direction (20) within the preset return stroke (28).

3. Method according to claim 1 or 2,
**characterised in that** the control signal is only generated if the stroke threshold (H_{S}) is overshot for a second time in the actuating direction (20) following the return stroke (28).

4. Method according to claim 3,
**characterised in that** the control signal is only generated if the second overshooting of the stroke threshold (H_{S}) happens within a preset interval time (ΔT_{P}) after the overshooting of the stroke threshold (H_{S}) against the actuating direction (20).

5. Method according to any of claims 1 to 4,
**characterised in that** the actuating time (ΔT_{B}) is 50 ms to 1 second.

6. Method according to any of claims 1 to 5,
**characterised in that** the actuating stroke (27) corresponds to 40% to 90% of the constructive actuating stroke (I; III) of the actuating element (2).

7. Method according to any of claims 1 to 6,
**characterised in that** the control unit (22) switches back into the blocking state if no actuating signal is received within a preset interval time (ΔT_{P}) after the occurrence of the control signal.

8. Method according to claim 7,
**characterised in that** the interval time (ΔT_{P}) lies between 1 and 5 seconds.

9. Method according to any of claims 1 to 8,
**characterised in that** the control signal is only generated if a grip sensor (4) on the handle (15, 15a) outputs a presence signal for the hand of a user.

10. Method according to claim 9,
**characterised in that** the control unit (22) switches back into the blocking state if the presence signal of the grip sensor (4) expires.

11. Method according to claim 10,
**characterised in that** the control unit (22) only switches back into the blocking state on the expiry of a preset interval and if the presence signal of the grip sensor (4) remains expired.

12. Method according to any of claims 1 to 11,
**characterised in that** the actuating stroke (27) of the actuating element (2) and the return stroke (28) of the actuating element (2) are identical.

13. Method according to any of claims 1 to 12,
**characterised in that** the standby state is indicated by a visual display (48).

14. Method according to claim 13,
**characterised in that** the visual display (48) is an LED.

15. Hand-guided working implement with an electric motor (3), with a voltage supply (24) for the operation of the electric motor (3) and with a manual actuating element (2) provided at a handle (15) of the working implement (1) and to be operated by the user for starting up the working implement (1), wherein the actuating element (2) is connected to a control unit (22) and the control unit (22) controls the energy supply from the voltage source (24) to the electric motor (3) in response to an operating signal of the actuating element (2) and blocks the supply of electric energy to the electric motor (3) independently of the operating signal of the actuating element (2) in a blocking state, wherein the control unit (22), on receipt of a control signal, switches from the blocking state into a standby state for enabling an energy supply to the electric motor (3),
**characterised in that** the control signal is derived from a combination of an actuating stroke (27) of the actuating element (2) and an actuating time (ΔT_{B}) of the actuating element (2), wherein a control signal () is generated if within a preset actuating time (ΔT_{B}) the actuating element (2) has passed through a preset actuating stroke (27) beyond a stroke threshold (H_{S}) in an actuating direction (20) and a preset return stroke (28) against the actuating direction (20).

16. Working implement according to claim 15,
**characterised in that** an increased spring force acts against the actuating element (2) at the stroke threshold (H_{S}).

17. Working implement according to claim 15 or 16,
**characterised in that** a switching depression (37) constructively formed in the housing of the handle (15) is assigned to the stroke threshold (H_{S}) of the actuating element (2).

18. Working implement according to any of claims 15 to 17,
**characterised in that** a grip sensor (4) for a user hand (39) is assigned to the actuating element (2).

19. Working implement according to claim 18,
**characterised in that** the grip sensor (4) is designed as an actuating lock for the actuating element (2).

20. Working implement according to any of claims 15 to 19,
**characterised in that** the actuating stroke of the actuating element (2) is detected by a switch and/or by a potentiometer.

## Revendications

1. Procédé pour la mise en marche d'un outillage tenu à la main, avec un moteur électrique (3), une alimentation en tension (24) pour faire fonctionner le moteur électrique (3), et un organe d'actionnement manuel (2), prévu sur une poignée (15) de l'outillage (1) et à manoeuvrer par l'utilisateur, pour mettre en marche le moteur électrique (3), l'organe d'actionnement (2) étant relié à une unité de commande (22), et l'unité de commande (22) commandant l'alimentation en énergie du moteur électrique (3), à partir de la source de tension (24), en fonction d'un signal de fonctionnement de l'organe d'actionnement (2), et ladite unité de commande (22) bloquant, dans un état de blocage, l'alimentation du moteur électrique (3) en énergie électrique indépendamment du signal de fonctionnement de l'organe d'actionnement (2), l'unité de commande (22), après réception d'un signal de commande, faisant passer l'unité de commande (22) de l'état de blocage à un état de veille afin de débloquer une alimentation en énergie du moteur électrique (3),
**caractérisé en ce que** le signal de commande est dérivé d'une combinaison d'une course d'actionnement (27) de l'organe d'actionnement (2) et d'un temps d'actionnement (ΔT_{B}) de l'organe d'actionnement (2), un signal de commande étant généré quand, à l'intérieur d'un temps d'actionnement prédéfini (ΔT_{B}), l'organe d'actionnement (2) a décrit une course d'actionnement prédéfinie (27) au-delà d'un seuil de course (H_{S}), dans un sens d'actionnement (20), et une course de rappel prédéfinie (28) en sens inverse du sens d'actionnement (20).

2. Procédé selon la revendication 1,
**caractérisé en ce qu'**à l'intérieur de la course de rappel prédéfinie (28), le seuil de course (H_{S}) est franchi en sens inverse du sens d'actionnement (20).

3. Procédé selon la revendication 1 ou 2,
**caractérisé en ce que** le signal de commande n'est généré qu'une fois que le seuil de course (H_{S}), après la course de rappel (28), a été franchi une deuxième fois dans le sens d'actionnement.

4. Procédé selon la revendication 3,
**caractérisé en ce que** le signal de commande n'est généré qu'une fois que le deuxième franchissement du seuil de course (H_{S}) a lieu à l'intérieur d'un temps de pause (ΔT_{P}) après le franchissement du seuil de course (H_{S}) en sens inverse du sens d'actionnement.

5. Procédé selon l'une des revendications 1 à 4,
**caractérisé en ce que** le temps d'actionnement (ΔT_{B}) est de 50 ms à 1 seconde.

6. Procédé selon l'une des revendications 1 à 5,
**caractérisé en ce que** la course d'actionnement (27) correspond à 40% à 90% de la course d'actionnement de construction (I ; III) de l'organe d'actionnement (2).

7. Procédé selon l'une des revendications 1 à 6,
**caractérisé en ce que** l'unité de commande (22) repasse à l'état de blocage quand aucun signal de fonctionnement n'arrive à l'intérieur d'un temps de pause prédéfini (ΔT_{P}) après l'apparition du signal de commande.

8. Procédé selon la revendication 7,
**caractérisé en ce que** le temps de pause (ΔT_{P}) est situé entre 1 et 5 secondes.

9. Procédé selon l'une des revendications 1 à 8,
**caractérisé en ce que** le signal de commande n'est généré que si un capteur de préhension (4) disposé sur la poignée (15, 15a) émet un signal de présence pour la main d'un utilisateur.

10. Procédé selon la revendication 9,
**caractérisé en ce que** l'unité de commande (22) revient à l'état de blocage quand le signal de présence du capteur de préhension (4) disparaît.

11. Procédé selon la revendication 10,
**caractérisé en ce que** l'unité de commande ne revient à l'état de blocage qu'après écoulement d'un laps de temps prédéfini et le signal de présence du capteur de préhension (4) disparaît également.

12. Procédé selon l'une des revendications 1 à 11,
**caractérisé en ce que** la course d'actionnement (27) de l'organe d'actionnement (2) et la course de rappel (28) de l'organe d'actionnement (2) sont égales.

13. Procédé selon l'une des revendications 1 à 12,
**caractérisé en ce que** l'état d'attente est indiqué par un affichage optique (48).

14. Procédé selon la revendication 13,
**caractérisé en ce que** l'affichage optique (48) est une LED.

15. Outillage tenu à la main, avec un moteur électrique (3), une alimentation en tension (24) pour faire fonctionner le moteur électrique (3), et un organe d'actionnement manuel (2), prévu sur une poignée (15) de l'outillage (1) et à manoeuvrer par l'utilisateur, pour mettre en marche le moteur électrique (3), l'organe d'actionnement (2) étant relié à une unité de commande (22), et l'unité de commande (22) commandant l'alimentation en énergie du moteur électrique (3), à partir de la source de tension (24), en fonction d'un signal de fonctionnement de l'organe d'actionnement (2), et ladite unité de commande (22) bloquant, dans un état de blocage, l'alimentation du moteur électrique (3) en énergie électrique indépendamment du signal de fonctionnement de l'organe d'actionnement (2), l'unité de commande (22), après réception d'un signal de commande, faisant passer l'unité de commande (22) de l'état de blocage à un état de veille afin de débloquer une alimentation en énergie du moteur électrique (3), **caractérisé en ce que** le signal de commande est dérivé d'une combinaison d'une course d'actionnement (27) de l'organe d'actionnement (2) et d'un temps d'actionnement (ΔT_{B}) de l'organe d'actionnement (2), un signal de commande étant généré quand à l'intérieur d'un temps d'actionnement prédéfini (ΔT_{B}) l'organe d'actionnement (2) a décrit une course d'actionnement prédéfinie (27) au-delà d'un seuil de course (H_{S}), dans un sens d'actionnement (20), et une course de rappel prédéfinie (28) en sens inverse du sens d'actionnement.

16. Outillage selon la revendication 15,
**caractérisé en ce que** dans le seuil de course (H_{S}), une force de ressort accrue agit à l'encontre de l'organe d'actionnement (2).

17. Outillage selon la revendication 15 ou 16,
**caractérisé en ce qu'**une cavité de commutation (37) prévue dans la construction du boîtier de la poignée (15) est associée au seuil de course (H_{S}) de l'organe d'actionnement (2).

18. Outillage selon l'une des revendications 15 à 17,
**caractérisé en ce qu'**un capteur de préhension (4) pour une main d'utilisateur (30) est associé à l'organe d'actionnement (2).

19. Outillage selon la revendication 18,
**caractérisé en ce que** le capteur de préhension (4) est conçu comme un dispositif de blocage d'actionnement pour l'organe d'actionnement (2).

20. Outillage selon l'une des revendications 15 à 19,
**caractérisé en ce que** la course de positionnement de l'organe d'actionnement (2) est détectée par un commutateur et/ou par un potentiomètre.
